# DEMANDE DE BREVET EUROPEEN

(11) **EP 1 176 348 A1**
(43) Date de publication de la demande: **30.01.2002**
(21) Numéro de dépôt: 01440238.2
(22) Date de dépôt: 25.07.2001
(51) Int. Cl.: F16K 37/00

(54) **Siège de vanne comprenant des électrodes notamment pour dispositif de contrôle de type "émail-test"**

(30) Priorité: 28.07.2000 FR 0009974
(71) Demandeur: DE DIETRICH ET CIE, 67110 Niederbronn les Bains (FR)
(72) Inventeur: Cronimus, Georges, 67110 Gumbrechtshoffen (FR)
(74) Mandataire: Metz, Paul

(57) **Abrégé**

Le siège de vanne (23) est réalisé à partir d'un polymère fluoré, par exemple en PTFE verré massif ou en PFA armé. Il comporte au moins une électrode (24) rapportée sur ou intégrée à ce siège et réalisée dans un matériau conducteur compatible avec la matière de celui-ci, par exemple en téflon graphité.

Le siège de vanne selon l'invention peut, notamment, être utilisé en coopération avec un dispositif de contrôle de l'intégrité du revêtement émaillé du type « émail-test ». Le siège est alors utilisé sur la vanne de vidange (11) du contenant à vérifier et comporte deux électrodes (24) disposées de façon à pouvoir être en contact avec le contenu (8).

Cette invention intéresse l'industrie chimique et en particulier les fabricants et utilisateurs de dispositifs « émail-test ».

## Description

La présente invention concerne un siège de vanne, de soupape ou analogue, comportant des électrodes notamment pour un dispositif de détection de défauts d'une couche d'émail, couramment appelé « émail-test ».

Le siège selon l'invention est préférentiellement destiné à une vanne de vidange d'un réacteur, d'une citerne, d'une colonne ou autre contenant revêtu intérieurement d'une couche d'émail dont la continuité doit être vérifiée.

Dans l'industrie chimique, on doit parfois employer ou stocker des réactifs ou produits particulièrement acides ou corrosifs qui rendent impossible l'utilisation de réacteurs, citernes, colonnes ou autres contenants classiques dont les parois en acier seraient attaquées et détériorées.

Une solution consiste à utiliser dans ce cas des réacteurs ou autres contenants dont la paroi interne est revêtue d'une couche protectrice en émail. Ce revêtement inerte et très résistant assure la protection du réacteur ou contenant contre les agressions du contenu.

Cependant, afin d'éviter tout risque de détérioration du contenant et tout risque de fuites pouvant se révéler dangereuses pour les hommes, le matériel et l'environnement, l'intégrité de ce revêtement protecteur émaillé doit être assurée à tout moment.

Un contrôle permanent de l'état de la couche d'émail doit donc être effectué. Pour cela, les industriels ont recours à des dispositifs de détection de défauts de la couche d'émail, couramment appelés « émail-tests ».

Afin de détecter un éventuel défaut d'émaillage, un tel dispositif doit comporter trois électrodes, une reliée à la masse métallique du contenant à vérifier et les deux autres en contact avec le liquide contenu dans celui-ci.

Les deux électrodes en contact avec le liquide mesurent entre elles un courant de référence permettant de déterminer la conductivité de la solution contenue dans le réacteur à vérifier. Pour vérifier la continuité de la couche d'émail, on mesure grâce à ce dispositif l'intensité du courant existant entre l'ensemble de ces deux électrodes et la masse métallique du réacteur au moyen de la troisième électrode. En cas de défaut d'émaillage, on détecte un courant de fuite dont l'intensité est proportionnelle à la surface de la zone non émaillée.

Un tel dispositif permet de contrôler facilement et de façon continue l'intégrité de la couche d'émail. Les défauts éventuels peuvent être détectés très tôt, ce qui permet d'éviter leur aggravation conduisant à la formation de fuites dangereuses et rend les réparations plus faciles et moins coûteuses.

Afin de pouvoir vérifier la totalité de la surface émaillée, les deux électrodes en contact avec le liquide doivent être placées le plus bas possible dans le contenant à contrôler. De ce fait, elles sont généralement placées au niveau de la vanne de vidange constituant évidemment le point le plus bas du contenant.

Selon l'art antérieur, ces électrodes sont intégrées à la face supérieure de la tête d'obturation du piston de la vanne de vidange, le piston étant mobile entre une position haute et une position basse correspondant respectivement à l'ouverture et à la fermeture de la vanne. Les fils conducteurs reliant ces électrodes à l'appareil « émail-test » passent de façon classique dans la tige du piston.

Le piston de la vanne de vidange étant en contact permanent avec le milieu agressif présent dans le contenant, il doit également être recouvert d'un revêtement protecteur émaillé. Or cette couche d'émail impose l'utilisation de matériaux conducteurs spécifiques, dont le coefficient de dilatation est compatible avec celui de l'émail et la résistance chimique similaire, pour la fabrication des électrodes intégrées à la surface supérieure de la tête du piston.

Ces électrodes sont généralement réalisées en platine ou en iridium lorsque le platine n'est pas suffisamment résistant pour supporter l'action corrosive du milieu réactionnel. Ces électrodes sont donc assez chères du fait de l'utilisation de tels matériaux ainsi que de la difficulté de réalisation.

De plus, en cas de problème sur ces électrodes ou sur l'émail du piston qui est la partie du réacteur la plus exposée aux agressions les plus diverses (abrasion, chocs mécaniques.), il est alors nécessaire de changer le piston d'obturation dans son ensemble. Or ce piston étant entièrement émaillé, son coût est relativement important.

Le but de l'invention est de proposer un dispositif à électrodes intégrées moins onéreux, facilement remplaçable et utilisable dans un contenant par exemple émaillé et équipé d'un dispositif « émail-test ».

Pour résoudre ce problème technique l'invention se rapporte à un siège de vanne comportant au moins une électrode et de préférence deux, pouvant être rapportée(s) sur ou intégrée(s) à ce siège. Ces électrodes peuvent, par exemple mais non limitativement, être utilisées au sein d'un dispositif de contrôle de l'intégrité d'un revêtement en émail tel qu'un émail-test.

Le siège de vanne selon l'invention est réalisé au moyen d'un polymère fluoré, tel qu'une matière téflonée par exemple et de préférence en téflon verré massif ou en téflon armé. Il peut ainsi résister aux agressions du milieu et assurer, du fait de son écrasement, une parfaite étanchéité lorsque la tête d'obturation du piston, en position basse, appuie sur celui-ci.

Chacune des électrodes est réalisée dans un matériau conducteur compatible avec la matière du siège de vanne, ce qui lui permet de pouvoir être rapportée sur ou intégrée dans le corps du siège de vanne. Elle peut ainsi, préférentiellement mais non limitativement, être réalisée à partir de téflon graphité. Le coût d'une telle électrode, parfaitement adaptée aux milieux les plus corrosifs, est nettement moins important que celui d'une électrode en platine ou en iridium incluse dans l'émail du piston.

De plus, en cas de problème nécessitant un remplacement des électrodes, le siège de vanne selon l'invention peut très facilement et très rapidement être démonté et remonté par dépose et repose de la vanne sans avoir à démonter le piston de celle-ci. N'étant pas émaillé mais réalisé à partir d'un polymère fluoré, le siège de vanne selon l'invention est peu onéreux, du moins beaucoup moins cher qu'un piston émaillé.

Le siège de vanne selon l'invention peut par exemple, mais non limitativement, être utilisé en coopération avec un dispositif de contrôle de l'état d'un revêtement émaillé du type « émail-test ».

Le siège selon l'invention est alors mis en place sur la vanne de vidange du contenant à vérifier, de manière à être situé le plus bas possible pour réaliser un contrôle complet. Il comporte deux électrodes, de préférence sous forme de plots conducteurs affleurant de la paroi supérieure du siège de façon à être en contact avec le contenu.

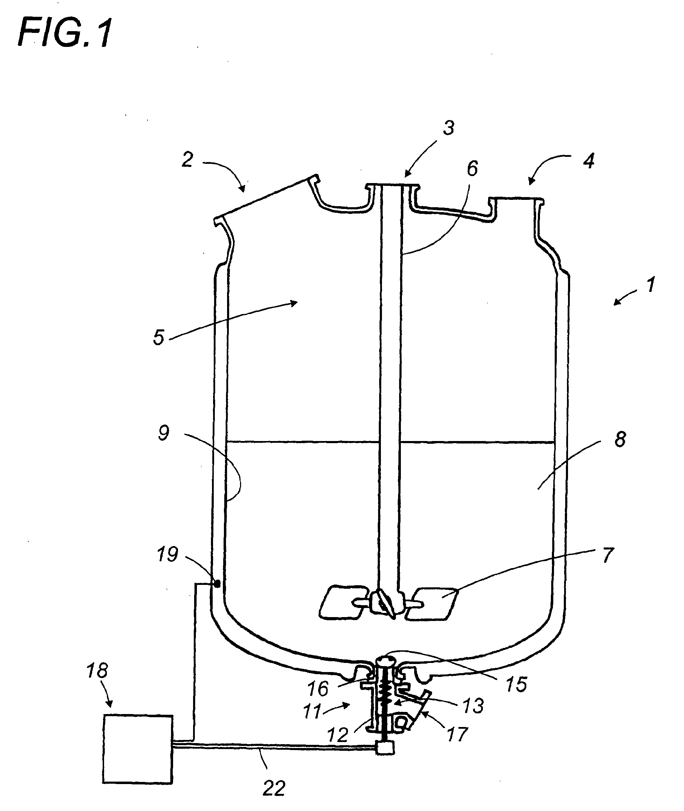

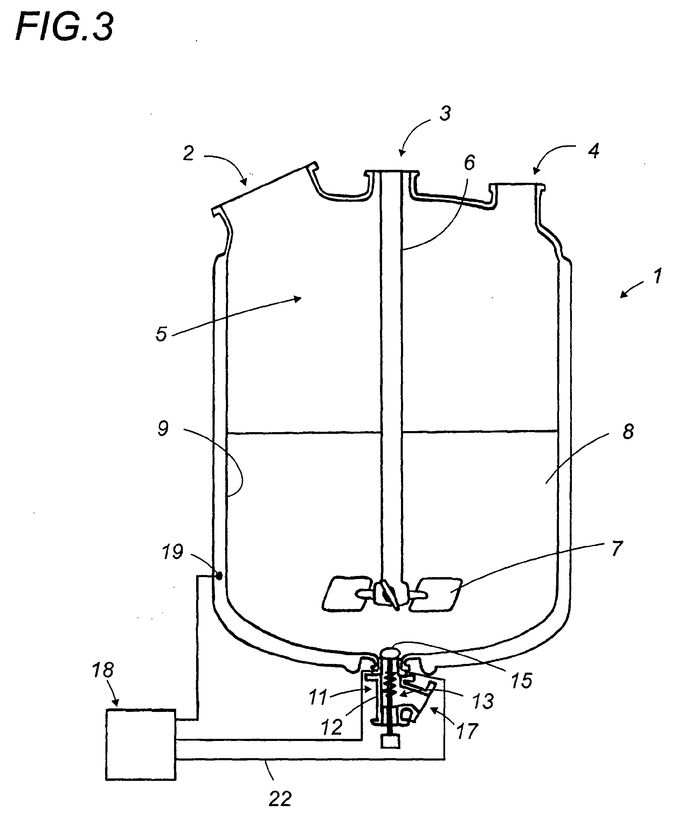

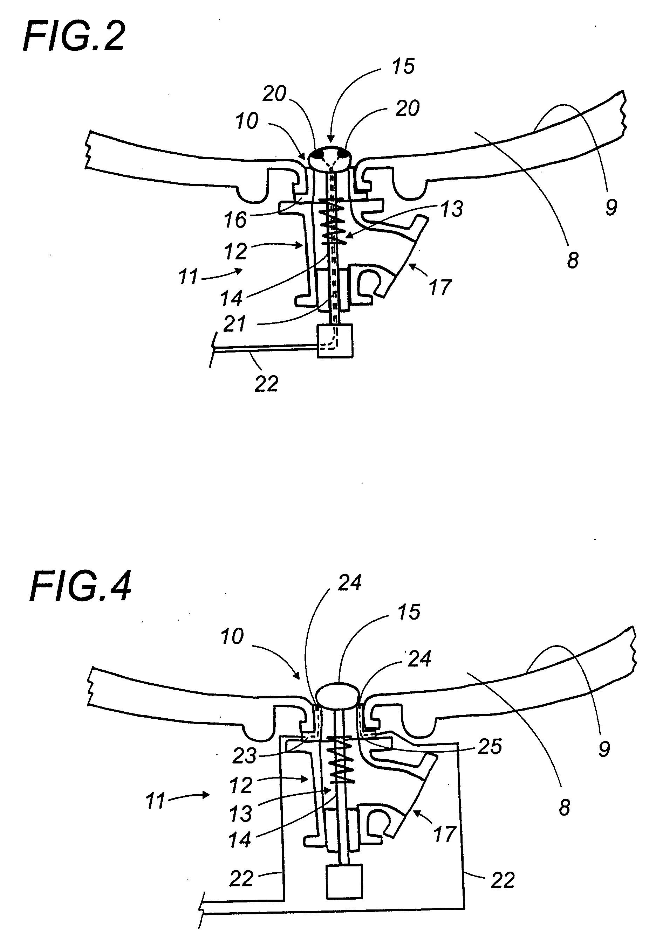

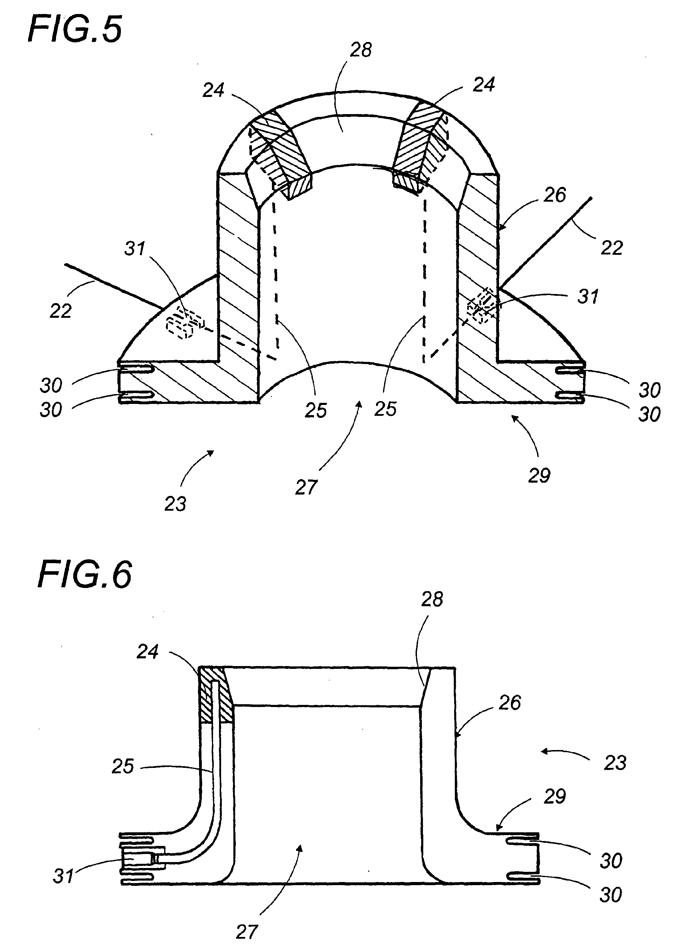

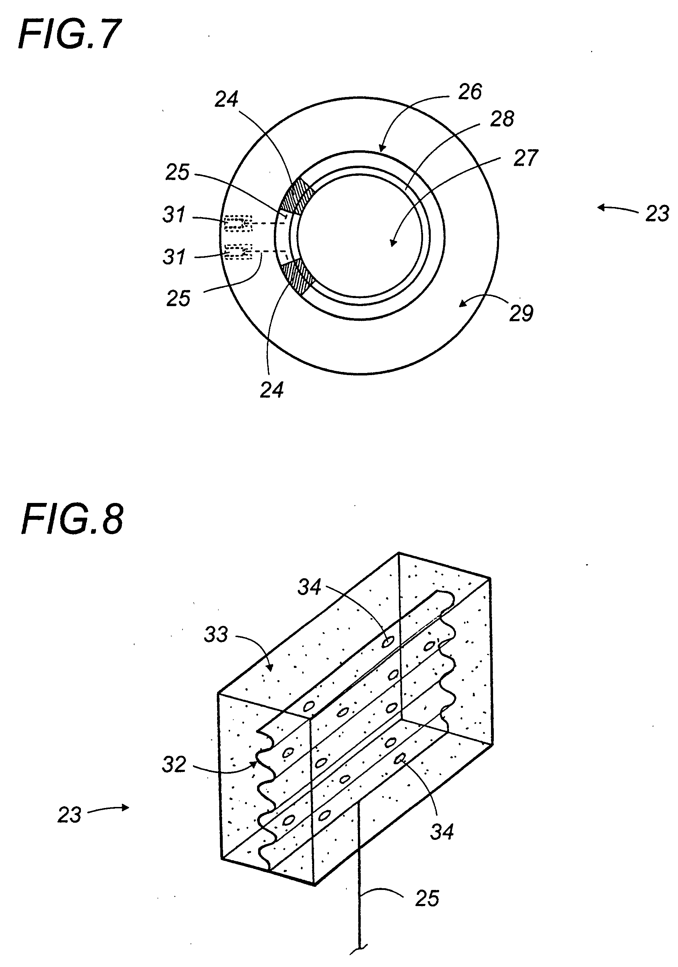

D'autres caractéristiques et avantages de l'invention apparaîtront à la lecture de la description détaillée qui va suivre, description faite en référence aux dessins annexés, dans lesquels :
. la figure 1 est une coupe longitudinale schématique d'un réacteur chimique émaillé sur lequel est installé un dispositif émail-test classique comprenant des électrodes disposées, selon l'art antérieur, dans la tête d'obturation du piston mobile de la vanne de vidange ;
. la figure 2 est un agrandissement en coupe de la partie inférieure du réacteur de la figure 1, illustrant plus particulièrement la vanne de vidange et son piston mobile sur lequel sont disposées les électrodes de l'émail-test selon l'art antérieur ;
. la figure 3 est une coupe longitudinale schématique d'un réacteur chimique émaillé dont la vanne de vidange comporte un siège selon la présente invention comprenant des électrodes pour un dispositif émail-test ;
. la figure 4 est un agrandissement en coupe de la partie inférieure du réacteur de la figure 3, illustrant plus particulièrement la vanne de vidange et son siège renfermant conformément à l'invention les électrodes de l'émail-test ;
. la figure 5 est une vue en coupe et en perspective d'un mode de réalisation de siège de vanne selon la présente invention comportant des électrodes par exemple pour émail-test ;
. la figure 6 est une vue en coupe longitudinale d'un autre mode de réalisation de siège de vanne selon la présente invention ;
. la figure 7 est une vue de dessus du mode de réalisation de siège de vanne représenté sur la figure 6 ;
. la figure 8 est une vue en perspective d'un mode de réalisation d'électrode par exemple pour émail-test pouvant être intégrée dans un siège de vanne selon l'invention.

Le siège de vanne à électrodes intégrées selon la présente invention va maintenant être décrit de façon détaillée en référence aux figures 1 à 8. Les éléments équivalents représentés sur les différentes figures porteront les mêmes références numériques.

Les deux premières figures illustrent un réacteur équipé d'un dispositif de contrôle d'une couche d'émail, couramment appelé « émail-test », comprenant des électrodes disposées selon l'art antérieur dans le piston de la vanne de vidange.

La figure 1 représente un réacteur chimique 1 percé de trois ouvertures supérieures 2, 3 et 4 pouvant servir à introduire les différents réactifs, solvants et catalyseurs ou à plonger divers instruments ou accessoires (agitateur, brise-lames, sondes, organes de prélèvement.) dans le réacteur 1.

Le réacteur 1 est équipé d'un agitateur mécanique 5 dont la tige 6 traverse l'ouverture centrale 3 et plonge vers la partie inférieure du réacteur. La tige 3 se termine par un ensemble de trois pales inclinées 7 brassant le contenu 8 du réacteur 1 lorsque la tige est entraînée en rotation par un moteur d'entraînement, non représenté, disposé à l'extérieur du réacteur.

Afin de pouvoir résister aux agressions d'un milieu réactionnel 8 très corrosif, la surface interne du réacteur 1 peut être entièrement revêtue d'une couche protectrice émaillée 9. De la même façon, toutes les surfaces pouvant se retrouver en contact avec le milieu réactionnel 8 doivent également être émaillées. C'est évidemment le cas de la tige 6 et des pales 7 de l'agitateur 5.

De manière classique, le réacteur 1 comporte au niveau de son point le plus bas un orifice 10 équipé d'une vanne de vidange 11, permettant de le vider entièrement de son contenu.

La vanne de vidange 11 comporte un corps de vanne 12 fixe et un piston 13 mobile dans le corps de vanne entre une position supérieure d'ouverture et une position inférieure de fermeture de la vanne de vidange 11. Le piston 13 comporte une tige 14 et une tête d'obturation 15 également recouverte d'un revêtement émaillé.

En position inférieure de fermeture, représentée sur les figures 1 à 4, la tête d'obturation 15 vient en appui contre la partie supérieure d'un siège de vanne 16 interposé entre l'orifice 10 du réacteur et le corps 12 de la vanne de vidange 11, assurant ainsi une fermeture étanche de la vanne de vidange 11 du réacteur 1.

En position supérieure d'ouverture, non représentée, la tête d'obturation 15 du piston mobile 13 est déplacée vers le haut, dégageant ainsi un chemin d'évacuation pour le liquide 8 contenu dans le réacteur 1 qui circule à travers le siège 16 puis le corps 12 de la vanne jusqu'à un orifice d'évacuation 17.

Le réacteur émaillé 1 est équipé d'un dispositif de contrôle 18 de la continuité de la couche protectrice d'émail 9 couramment appelé « émail-test ».

Ce dispositif « émail-test » 18 comporte trois électrodes, l'une 19 reliée à la masse métallique du réacteur 1 et les deux autres 20 en contact avec le liquide 8 contenu dans celui-ci.

Pour pouvoir détecter un défaut en un endroit quelconque du réacteur 1, les deux électrodes 20 doivent être placées le plus bas possible dans le réacteur. Selon l'art antérieur illustré sur les figures 1 et 2, elles sont intégrées à la face supérieure de la tête d'obturation 15 du piston 13 de la vanne de vidange 11.

Des fils conducteurs 21 passent dans la tige 14 du piston 13, afin de relier les électrodes 20 aux conducteurs 22 du dispositif « émail-test » 18.

La tête d'obturation 15 du piston 13 est également recouverte d'un revêtement protecteur émaillé, car elle se trouve en contact permanent avec la solution 8 présente dans le contenant. Cette couche d'émail impose l'utilisation de matériaux conducteurs spécifiques, compatibles avec l'émail et pouvant résister à la pression de celui-ci, pour la fabrication des électrodes 20 intégrées à la surface supérieure de la tête du piston.

Ces électrodes sont généralement réalisées en platine ou en iridium lorsque le platine n'est pas suffisamment résistant pour supporter l'action corrosive du milieu réactionnel 8. Ces électrodes 20 sont donc assez chères.

De plus, en cas de problème, il faut changer le piston 13 dans son ensemble, ce qui du fait de son émaillage est relativement onéreux.

Les figures 3 et 4 illustrent cette fois un réacteur 1 équipé d'un siège de vanne comprenant des électrodes conformément à la présente invention.

Le réacteur 1 est identique à celui des figures 1 et 2. Il comporte de la même façon des ouvertures 2, 3 et 4 dans sa partie supérieure et est équipé d'un agitateur mécanique 5 comprenant une tige 6 sensiblement verticale terminée par trois pales inclinées 7. Sa surface interne est recouverte d'une couche d'émail 9 le protégeant des attaques du milieu réactionnel 8.

A son point le plus bas, le réacteur présente un orifice 10 équipé d'une vanne de vidange 11 comprenant de façon classique un corps de vanne 12 fixe et un piston 13 mobile à l'intérieur du corps de vanne entre une position inférieure de fermeture et une position supérieure d'ouverture où le contenu peut s'échapper par l'orifice d'évacuation 17 du corps de vanne 12.

Un siège de vanne 23 est interposé entre l'orifice émaillé 10 du réacteur et le corps de vanne 12 fixe.

En position inférieure de fermeture, représentée sur les figures 3 et 4, la tête d'obturation 15 du piston 13 vient en appui contre la partie supérieure du siège de vanne 23, assurant ainsi une fermeture étanche de la vanne de vidange 11 du réacteur 1.

Le réacteur émaillé 1 est également équipé d'un dispositif « émail-test » 18 de contrôle de la continuité de la couche protectrice d'émail 9. Ce dispositif doit être relié à trois électrodes, l'une 19 en contact avec la masse métallique du réacteur 1 et les deux autres en contact avec le liquide 8.

Le siège de vanne 23 comporte selon l'invention au moins une électrode 24 rapportée sur ou intégrée à celui-ci. Sur les différents modes de réalisation représentés sur les figures 3 à 7, le siège de vanne selon l'invention en comporte deux. Cependant, il s'agit d'un exemple à but illustratif et en aucun cas limitatif, le nombre d'électrodes du siège pouvant être variable en fonction des utilisations souhaitées.

Dans le cas d'une utilisation en coopération avec un dispositif de type « émail-test », le siège de vanne 23 selon l'invention comporte préférentiellement deux électrodes 24 disposées au niveau de sa paroi supérieure de façon à être en contact avec la solution 8 contenue dans le réacteur à contrôler.

Lorsque le siège de vanne 23 selon l'invention est mis en place dans le réacteur 1, sa paroi supérieure se trouve, de façon particulièrement avantageuse, au point le plus bas situé à l'intérieur du réacteur 1. Les électrodes 24 disposées à ce niveau permettent donc de détecter tout défaut d'émaillage en un endroit quelconque du réacteur. Il est même possible de contrôler l'émaillage de la tête d'obturation 15 du piston 13 se trouvant au-dessus.

Des fils conducteurs 25 passent dans le siège de vanne 23, afin de relier les électrodes 24 aux conducteurs extérieurs 22 et par-là au dispositif « émail-test » 18.

Le siège de vanne 23 selon l'invention va maintenant être décrit de façon plus détaillée en référence aux figures 5 à 7.

Le siège de vanne 23 présente un corps 26 de forme générale sensiblement tubulaire définissant un espace intérieur 27 creux, apte à recevoir la tige 14 mobile du piston 13 et à autoriser le passage du fluide lorsque la vanne 11 est en position d'ouverture.

La partie supérieure de la paroi interne du corps cylindrique 26 présente de préférence un chanfrein à rampe conique 28, qui permet un meilleur engagement par contact de la tête d'obturation 15 contre le siège 23 assurant une parfaite étanchéité de la vanne en position de fermeture.

Le corps cylindrique 26 se prolonge en partie inférieure par une collerette périphérique 29 s'étendant vers l'extérieur du siège de vanne 23 et par exemple dans une direction sensiblement perpendiculaire au corps cylindrique 26. Lorsque le siège de vanne 23 est installé sur le réacteur 1, il est maintenu en position par pincement de cette collerette 29 entre la bride de l'orifice 10 du réacteur et la bride de la tubulure d'entrée du corps de vanne 12.

Afin d'assurer une parfaite étanchéité, la collerette 29 comporte de préférence deux rainures périmétriques 30 évidées dans sa paroi latérale et susceptibles de recevoir deux joints annulaires plats.

La taille, la forme et l'inclinaison du corps cylindrique 26 et de la collerette 29 peuvent être différentes de celles représentées et précédemment décrites. Ces paramètres sont choisis en fonction de ceux de l'orifice 10 et de la vanne 11 à équiper, de façon que le siège 23 soit le plus adapté possible à ceux-ci.

Selon l'invention, le siège de vanne 23 comporte au moins une électrode 24 et de préférence deux qui lui sont rapportées ou fixées de façon quelconque. Un ou plusieurs conducteurs 25 permettent de relier ces électrodes à un appareil quelconque, par exemple au dispositif « émail-test » 18.

Selon un mode de réalisation préférentiel illustré sur les figures 5 à 7, le siège de vanne 23 comporte deux électrodes 24 qui sont intégrées à sa paroi supérieure. Ces électrodes 24 se présentent de préférence sous la forme de plots conducteurs insérés lors du moulage ou se confondant dans la matière et faisant partie intégrante du siège de vanne 23. Elles affleurent de la paroi supérieure du siège afin d'être en contact avec le contenu 8.

Selon une autre variante, chaque électrode peut être constituée d'une zone spécifique de la matière du siège de vanne, présentant des inclusions ou des inserts conducteurs.

Des fils conducteurs 25 partant des électrodes 24 peuvent par exemple passer à l'intérieur de l'épaisseur du siège de vanne 23 et aboutir à des connecteurs 31 disposés au niveau d'un emplacement accessible du siège de vanne 23. Ces connecteurs 31, de préférence situés dans la paroi latérale de la collerette 29, permettent de relier les électrodes 24 à l'appareil 18 par l'intermédiaire des conducteurs extérieurs 22 qui peuvent y être branchés.

Selon un mode de réalisation préférentiel illustré sur la figure 7, les connecteurs 31 peuvent avantageusement être regroupés sur une même zone accessible du siège de vanne 23, par exemple une même zone de la collerette 29, formant ainsi une unique zone de connexion.

Le siège de vanne selon l'invention est de préférence réalisé à partir d'un polymère fluoré tel que par exemple une matière téflonée. Il peut ainsi résister aux agressions du milieu et assurer, du fait de son écrasement, une parfaite étanchéité lorsque la tête d'obturation 15 du piston 13, en position basse, appuie sur celui-ci. Il peut ainsi par exemple être réalisé en PTFE verré massif ou en PFA renforcé par une armature interne en acier.

Chacune des électrodes 24 est alors réalisée dans un matériau conducteur compatible avec la matière du siège de vanne 23, ce qui lui permet de pouvoir être rapportée sur ou intégrée dans le corps du siège de vanne. Elle peut ainsi, préférentiellement mais non limitativement, être réalisée à partir de téflon graphité. On peut envisager également l'utilisation d'autres matériaux, tels que par exemple du graphite ou des métaux précieux.

Un exemple parmi d'autres et non limitatif d'électrode pouvant être intégrée dans un siège de vanne 23 selon l'invention a été représenté sur la figure 8.

L'électrode 24 comporte une plaquette métallique 32 reliée au conducteur 25 et enrobée par surmoulage dans un bloc 33 de téflon graphité. La plaquette 32 est de préférence ondulée et percée d'une pluralité de perforations 34 permettant une interpénétration du téflon graphité à travers la plaquette 32 au cours du surmoulage, ce qui améliore l'ancrage de celle-ci.

Le bloc 33 présente sur la figure 8 une forme sensiblement parallélépipédique, mais il peut être de toute autre forme mieux adaptée à son intégration dans le siège de vanne 23. Il peut notamment comporter une surface chanfreinée comme sur les figures 5 à 7.

Le siège de vanne à électrodes selon l'invention est particulièrement bien adapté pour être utilisé en coopération avec un dispositif de type « émail-test ». Cependant, il doit être bien compris que son utilisation n'est pas limitée à cette application. Il peut ainsi être utilisé avec tout type d'appareil nécessitant des électrodes avec ou sans contact avec le milieu réactionnel. On peut par exemple envisager une autre application du siège de vanne selon l'invention dans laquelle les électrodes permettraient de détecter l'état vide du réacteur.

De la même façon, le siège de vanne selon l'invention n'est pas limité à une vanne de vidange pour un réacteur émaillé. Un tel siège peut être utilisé pour de très nombreux types de vannes pouvant équiper les contenants les plus divers, émaillés ou non, comme par exemple des réacteurs, citernes, colonnes ou autres.

## Revendications

1. Siège de vanne, de soupape ou analogue destiné à équiper un contenant (1), tel que par exemple un réacteur, une citerne ou une colonne, **caractérisé en ce qu'**il comporte au moins une électrode (24) rapportée sur ou intégrée à ce siège (23), réalisée dans un matériau conducteur compatible avec la matière de celui-ci et susceptible d'être reliée à un appareil quelconque (18) de mesure ou de détection.

2. Siège de vanne selon la revendication précédente **caractérisé en ce qu'**il est réalisé à partir d'un polymère fluoré.

3. Siège de vanne selon la revendication précédente **caractérisé en ce qu'**il est réalisé en PTFE verré massif.

4. Siège de vanne selon la revendication 2 **caractérisé en ce qu'**il est réalisé en PFA armé.

5. Siège de vanne selon l'une quelconque des revendications précédentes **caractérisé en ce qu'**il est destiné à être mis en place sur une vanne de vidange (11) du contenant (1).

6. Siège de vanne selon l'une quelconque des revendications précédentes **caractérisé en ce qu'**il est utilisé en coopération avec un dispositif de détection de défauts d'une couche d'émail.

7. Siège de vanne selon l'une quelconque des revendications précédentes **caractérisé en ce qu'**il comporte deux électrodes (24).

8. Siège de vanne selon l'une quelconque des revendications précédentes **caractérisé en ce qu'**au moins une des électrodes (24) est disposée de façon à pouvoir être en contact avec le contenu (8).

9. Siège de vanne selon l'une quelconque des revendications précédentes **caractérisé en ce qu'**au moins une des électrodes (24) se présente sous la forme d'un plot conducteur inséré lors du moulage et faisant partie intégrante du siège de vanne (23).

10. Siège de vanne selon l'une quelconque des revendications précédentes **caractérisé en ce qu'**au moins une électrode (24) est susceptible d'être reliée à un appareil quelconque (18) de mesure ou de détection au moyen d'un conducteur (25) passant à l'intérieur de l'épaisseur du siège de vanne (23).

11. Siège de vanne selon l'une quelconque des revendications précédentes **caractérisé en ce qu'**il comporte au moins un connecteur (31) disposé au niveau d'un emplacement accessible du siège de vanne (23) permettant de relier cette au moins une électrode (24) à l'appareil quelconque (18) par l'intermédiaire d'un conducteur extérieur (22) qui peut y être branché.

12. Siège de vanne selon la revendication précédente **caractérisé en ce que** les connecteurs (31) sont regroupés sur une même zone accessible du siège de vanne (23) formant ainsi une unique zone de connexion.

13. Siège de vanne selon l'une quelconque des revendications précédentes **caractérisé en ce que** l'une au moins des électrodes (24) comprend du téflon graphité.

14. Siège de vanne selon la revendication précédente **caractérisé en ce que** l'une au moins des électrodes (24) comprend une plaquette métallique (32) reliée à un conducteur (25) et enrobée par surmoulage dans un bloc (33) de téflon graphité.

15. Siège de vanne selon la revendication précédente **caractérisé en ce que** la plaquette (32) est ondulée et percée d'une pluralité de perforations (34).
